# EUROPÄISCHE PATENTSCHRIFT

(11) **EP 2 558 746 B1**
(45) Veröffentlichungstag und Bekanntmachung des Hinweises auf die Patenterteilung: **15.01.2014**
(21) Anmeldenummer: 11705187.0
(22) Anmeldetag: 14.02.2011
(51) Int. Cl.: F16H 3/72, B60K 6/365

(54) **STUFENLOSE GETRIEBEVORRICHTUNG MIT LEISTUNGSVERZWEIGUNG**
VARIABLE TRANSMISSION DEVICE WITH SPLIT-TORQUE
DISPOSITIF DE TRANSMISSION À VARIATION CONTINUE AVEC DIVISION DE PUISSANCE

(30) Priorität: 14.04.2010 DE 102010003941
(43) Veröffentlichungstag der Anmeldung: 20.02.2013
(73) Patentinhaber: ZF Friedrichshafen AG, 88038 Friedrichshafen (DE)
(72) Erfinder: BAILLY, Gerhard, 88046 Friedrichshafen (DE); POHLENZ, Jürgen, 88214 Ravensburg (DE); GRAD, Karl, 94161 Ruderting (DE)
(86) Internationale Anmeldenummer: PCT/EP2011/052093
(87) Internationale Veröffentlichungsnummer: WO 2011/128125

(56) Entgegenhaltungen:
- EP-A1- 0 769 404
- EP-A2- 0 941 883
- WO-A1-2007/031396
- DE-A1- 10 128 076
- DE-A1- 10 358 114

## Beschreibung

Die Erfindung betrifft eine stufenlose Getriebevorrichtung mit Leistungsverzweigung gemäß der im Oberbegriff des Patentanspruches 1 näher definierten Art, und wie sie aus der EP0941883 A bekannt ist.

In der DE 101 28 076 A1 und in Fig. 1 ist eine aus dem Stand der Technik bekannte Getriebevorrichtung eines Fahrzeugantriebsstranges mit einer Antriebsmaschine bzw. einer Brennkraftmaschine und einem Abtrieb dargestellt. Der Getriebevorrichtung ist ein als Hydrostateinrichtung ausgebildeter Variator zum stufenlosen Variieren einer Übersetzung einer Getriebevorrichtung zugeordnet. Ein von der Antriebsmaschine zur Verfügung gestelltes Drehmoment wird im Bereich eines Getriebeeingangs in die Getriebevorrichtung eingeleitet und im Bereich einer Getriebeausgangswelle aus der Getriebevorrichtung in Richtung des Abtriebs geleitet.

Das im Bereich des Getriebeeingangs anliegende Drehmoment der Antriebsmaschine wird über eine als Hohlrad ausgeführte erste Welle eines vorliegend als Einfachplanet ausgebildeten Summierplanetengetriebes in die Getriebevorrichtung eingeleitet. Mit Hilfe des Summierplanetengetriebes wird eine sogenannte Leistungsverzweigung des Antriebsmomentes der Antriebsmaschine durchgeführt, wobei das Drehmoment von der ersten Welle des Summierplanetengetriebes auf eine weitere Welle weitergeleitet wird, auf der wiederum Planetenräder drehbar angeordnet sind. Die Planetenräder kämmen mit einer als Sonnenrad ausgeführten zweiten Welle des Summierplanetengetriebes, die vorliegend über eine Stirnradverzahnung mit dem Variator wirkverbunden ist.

Getriebeausgangsseitig ist der Variator über eine Räderkette mit einer über die erste Welle des Summierplanetengetriebes drehfest verbundenen Getriebewelle wirkverbunden, die sich im Wesentlichen über die gesamte axiale Länge der Getriebevorrichtung durch diese hindurch erstreckt und über die getriebeausgangsseitig verschiedene Verbraucher eines vorzugsweise als Baustellenfahrzeug oder als landwirtschaftlichen Fahrzeuges ausgehend von der Antriebsmaschine mit Drehmoment versorgbar sind. Über die Stirnradverzahnung ist die zweite Welle des Summierplanetengetriebes mit einer ersten Welle des Variators gekoppelt, während die erste Welle des Summierplanetengetriebes über die Welle und die Räderkette mit einer zweiten Welle des Variators in Wirkverbindung steht.

Neben dem Summierplanetengetriebe ist die Getriebevorrichtung mit drei weiteren Planetenradsätzen sowie mit fünf reibschlüssigen Schaltelementen eines Schaltgetriebes ausgeführt, wobei die reibschlüssigen Schaltelemente reibschlüssige Kupplungen sind, während das reibschlüssige Schaltelement eine Bremse ist.

Die erste Welle des Summierplanetengetriebes ist mit einem Planetenträger des ersten Planetenradsatzes drehfest verbunden. Des Weiteren ist die weitere Welle des Summierplanetengetriebes drehfest mit einem Planetenträger des zweiten Planetenradsatzes und einem Hohlrad des ersten Planetenradsatzes drehfest gekoppelt. Ein Sonnenrad des ersten Planetenradsatzes ist drehfest mit einem Sonnenrad des zweiten Planetenradsatzes verbunden.

Der Planetenträger des Summierplanetengetriebes, das damit drehfest verbundene Hohlrad des ersten Planetenradsatzes und der wiederum damit drehfest verbundene Planetenträger des zweiten Planetenradsatzes sind über das dritte reibschlüssige Schaltelement drehfest mit einem Planetenträger des dritten Planetenradsatzes verbindbar. Der Planetenträger des dritten Planetenradsatzes ist drehfest mit der Getriebeausgangswelle verbunden. In geschlossenem Betriebszustand des vierten reibschlüssigen Schaltelementes ist die weitere Welle des Summierplanetengetriebes gemeinsam mit dem Hohlrad des ersten Planetenradsatzes und dem Planetenträger des zweiten Planetenradsatzes drehfest mit einem Sonnenrad des dritten Planetenradsatzes gekoppelt, während ein Hohlrad des dritten Planetenradsatzes in geschlossenem Betriebszustand der Bremse drehfest mit einem getriebegehäusefesten Bauteil in Wirkverbindung steht.

Wird das erste reibschlüssige Schaltelement geschlossen, ist ein Hohlrad des zweiten Planetenradsatzes drehfest mit dem Sonnenrad des dritten Planetenradsatzes verbunden, während die Sonnenräder der Planetenradsätze bei geschlossenem zweiten reibschlüssigen Schaltelement fest mit dem Sonnenrad des dritten Planetenradsatzes verbunden sind.

Die vorbeschriebene Getriebevorrichtung ist durch die zugeordnete Hydrostateinrichtung nachteilhafterweise sowohl durch einen hohen Bauraumbedarf als auch durch hohe Herstellkosten gekennzeichnet. Des Weiteren ist die Getriebevorrichtung aufgrund des Kühl- und Schmierölbedarfs der Hydrostateinheit im hydraulischen Versorgungssystem der Getriebevorrichtung und auch durch Lager-, Verzahnungs- und Schleppverluste im Bereich des hydrostatischen Leistungspfades über den gesamten Betriebsbereich der Getriebevorrichtung unerwünschterweise nur mit reduziertem Wirkungsgrad betreibbar. Zusätzlich sind die Bauteile der Getriebevorrichtung aufgrund der variator- bzw. hydrostateinrichtungsseitigen Schwingungsanregung hohen Belastungen ausgesetzt, die eine Lebensdauer nachteilig beeinflussen.

Zudem ist die Getriebevorrichtung bei niedrigen Betriebstemperaturen der Hydrostateinrichtung erst nach Ablauf einer zeitaufwändigen Aufwärmphase der Hydrostateinrichtung in gewünschtem Umfang betreibbar.

Die EP 941 883 A2 offenbart eine stufenlose Getriebevorrichtung mit Leistungsverzweigung, die im Bereich eines Summierplanetengetriebes (7) erfolgt, wobei eine erste Welle (9) des Summierplanetengetriebes (7) mit einer Antriebsmaschine (1) in Wirkverbindung bringbar ist, wobei eine zweite Welle (8) des Summierplanetengetriebes (7) zum stufenlosen Variieren der Übersetzung mit einer elektrischen Maschine (6) verbindbar ist, die wiederum mit einer elektrischen Energiequelle (20 koppelbar ist.

Der vorliegenden Erfindung liegt daher die Aufgabe zugrunde, eine bauraumgünstige stufenlose Getriebevorrichtung mit Leistungsverzweigung zur Verfügung zu stellen, mit welcher die vorgenannten Nachteile der aus der Praxis bekannten stufenlosen Getriebevorrichtung auf einfache und kostengünstige Art und Weise vermeidbar sind.

Erfindungsgemäß wird diese Aufgabe mit einer stufenlosen Getriebevorrichtung mit den Merkmalen des Patentanspruches 1 gelöst.

Bei der erfindungsgemäßen stufenlosen Getriebevorrichtung mit Leistungsverzweigung, die im Bereich eines Summierplanetengetriebes erfolgt, ist eine erste Welle des Summierplanetengetriebes mit einer Antriebsmaschine in Wirkverbindung bringbar. Eine zweite Welle des Summierplanetengetriebes ist zum stufenlosen Variieren der Übersetzung mit einer elektrischen Maschine verbindbar, die wiederum mit einer elektrischen Energiequelle koppelbar ist.

Aufgrund der Ausführung der erfindungsgemäßen stufenlosen Getriebevorrichtung mit einer elektrischen Maschine zum stufenlosen Variieren der Übersetzung anstatt eines als Hydrostateinrichtung ausgebildeten Variators ist die erfindungsgemäße stufenlose Getriebevorrichtung im Vergleich zu der aus der Praxis bekannten Getriebevorrichtung in radialer oder in axialer Richtung mit einem geringeren Bauraumbedarf ausführbar. Des Weiteren ist die erfindungsgemäße Getriebevorrichtung durch den Entfall der Hydrostateinheit und deren Antriebssystem, das unter anderem Antriebsräder, Wellen, Lager und Gehäuseteile umfasst, auch kostengünstiger herstellbar.

Die erfindungsgemäße stufenlose Getriebevorrichtung ist im Vergleich zu der aus der Praxis bekannten Getriebevorrichtung auch mit einem höheren Wirkungsgrad betreibbar, da Antriebsverlustleistungen durch den Entfall des Kühl- und Schmierölbedarfs der Hydrostateinheit im hydraulischen Versorgungssystem der Getriebevorrichtung und die damit einhergehende Vermeidung von Lager-, Verzahnungs- und Schleppverlusten im Bereich des hydrostatischen Leistungspfades über den gesamten Betriebszustand eines Fahrzeuges reduziert sind.

Getriebekomponenten der erfindungsgemäßen stufenlosen Getriebevorrichtung sind im Gegensatz zu der bekannten Getriebevorrichtung aufgrund des Entfalls der mechanischen und hydraulischen Schwingungsanregung durch die Hydrostateinheit geringeren Belastungen ausgesetzt, wodurch eine Lebensdauer der erfindungsgemäßen Getriebevorrichtung verbessert ist.

Des Weiteren ist die mit dem Summierplanetengetriebe gekoppelte elektrische Maschine vorzugsweise im Schubbetrieb eines Fahrzeuges bis nahe eines Fahrzeugstillstandes generatorisch betreibbar und somit ein den Wirkungsgrad eines mit der Getriebevorrichtung ausgeführten Fahrzeugantriebsstranges verbessernder Rekuperationsbetrieb darstellbar.

Ein mit der erfindungsgemäßen stufenlosen Getriebevorrichtung ausgeführtes Fahrzeug ist im Vergleich zu der aus der Praxis bekannten Getriebevorrichtung auch mit höherer Spontaneität betreibbar, da die zeitaufwändige Aufwärmphase vor der Inbetriebnahme der Hydrostateinrichtung der bekannten Getriebevorrichtung nicht erforderlich ist.

Bei einer besonders bauraumgünstigen und emissionsarmen Ausführungsform der erfindungsgemäßen Getriebevorrichtung weist die elektrische Energiequelle eine Brennstoffzelle auf.

Umfasst die elektrische Energiequelle eine elektrische Maschine, die mit einer Brennkraftmaschine in Wirkverbindung bringbar ist, ist die mit dem Summierplanetengetriebe verbundene und zur stufenlosen Veränderung der Übersetzung der Getriebevorrichtung vorgesehene elektrische Maschine in gewünschtem Umfang über einen entsprechend langen Zeitraum mit elektrischer Energie versorgbar.

Ist die Antriebsmaschine als eine elektrische Maschine ausgebildet, ist ein mit der stufenlosen Getriebevorrichtung ausgeführtes Fahrzeug ohne zusätzliche mechanische Wendeeinheit allein durch Drehrichtungsumkehr im Bereich der elektrischen Maschine auf konstruktiv einfache und kostengünstige Art und Weise sowie mit geringem Bauraumbedarf auch in Rückwärtsfahrtrichtung betreibbar.

Die als elektrische Maschine ausgeführte Antriebsmaschine ist mit der Energiequelle und vorzugsweise auch mit der mit der zweiten Welle des Summierplanetengetriebes verbindbaren elektrischen Maschine elektrisch koppelbar, womit in Abhängigkeit des jeweils vorliegenden Betriebszustandes eines mit der erfindungsgemäßen stufenlosen Getriebevorrichtung ausgeführten Fahrzeugantriebsstranges elektrische Energie zwischen den elektrischen Maschinen austauschbar ist und ein Fahrzeugantriebsstrang mit hohem Wirkungsgrad betreibbar ist.

Ist die Antriebsmaschine als eine Brennkraftmaschine ausgeführt, besteht auf einfache Art und Weise die Möglichkeit, die elektrische Maschine der elektrischen Energiequelle mit dieser zu koppeln und die Antriebsmaschine und die mit der elektrischen Maschine der elektrischen Energiequelle in Wirkverbindung bringbaren Brennkraftmaschine als bauliche Einheit auszuführen. Alternativ hierzu besteht jedoch auch die Möglichkeit, dass die Antriebsmaschine und die mit der elektrischen Maschine der elektrischen Energiequelle in Wirkverbindung bringbare Brennkraftmaschine separate Brennkraftmaschinen sind.

Ist die Antriebsmaschine über ein reibschlüssiges Schaltelement mit der ersten Welle des Summierplanetengetriebes verbindbar, ist die Antriebsmaschine betriebszustandsabhängig von der ersten Welle des Summierplanetengetriebes trennbar, womit eine unerwünschte Einleitung von dem Bereich der Antriebsmaschine erzeugten Schleppmomenten in die Getriebevorrichtung auf einfache Art und Weise vermieden wird.

Bei bauraumgünstigen Ausführungsformen der erfindungsgemäßen stufenlosen Getriebevorrichtung sind die elektrischen Maschinen zumindest bereichsweise axial nebeneinander und/oder radial ineinander angeordnet.

Eine kostengünstige weitere Ausführungsform der erfindungsgemäßen stufenlosen Getriebevorrichtung weist einen gemeinsamen Kühlkreislauf der elektrischen Maschinen auf.

Sind die elektrischen Maschinen jeweils über ein Getriebe mit dem Summierplanetengetriebe koppelbar, ist jeweils eine Anpassung der Rotordrehzahlen an die optimalen Betriebsbereiche der elektrischen Maschine auf einfache und kostengünstige Art und Weise realisierbar.

Bei einer weiteren vorteilhaften Ausführungsform der stufenlosen Getriebevorrichtung weist die elektrische Energiequelle eine elektrische Speichereinrichtung auf, womit im Betrieb erzeugte elektrische Energie, die aktuell nicht für den Antrieb einer elektrischen Maschine oder zur Versorgung eines Bordnetzes benötigt wird, bei weiterer Verbesserung des Wirkungsgrades im Bereich der elektrischen Speichereinrichtung zwischenspeicherbar ist.

Eine durch eine hohe Leistungsdichte gekennzeichnete weitere Ausführungsform der erfindungsgemäßen stufenlosen Getriebevorrichtung weist ein Schaltgetriebe auf, das mit der dritten Welle des Summierplanetengetriebes verbunden ist und das mehrere Planetengetriebeeinrichtungen umfasst, deren Wellen zur Darstellung verschiedener Übersetzungsbereiche, innerhalb welcher die Übersetzung jeweils über das Summierplanetengetriebe und die damit verbundene elektrische Maschine stufenlos variierbar ist, über vorzugsweise reibschlüssige Schaltelemente miteinander verbindbar sind.

Die erste Welle des Summierplanetengetriebes ist bei einer weiteren ebenfalls durch eine hohe Leistungsdichte gekennzeichneten Ausführungsform der erfindungsgemäßen stufenlosen Getriebevorrichtung mit einer ersten Welle einer ersten Planetengetriebeeinrichtung des Schaltgetriebes verbunden, während die dritte Welle des Summierplanetengetriebes mit einer zweiten Welle der ersten Planetengetriebeeinrichtung und mit einer ersten Welle einer zweiten Planetengetriebeeinrichtung des Schaltgetriebes verbunden ist.

Sowohl die in den Patentansprüchen angegebenen Merkmale als auch die in den nachfolgenden Ausführungsbeispielen der erfindungsgemäßen stufenlosen Getriebevorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Getriebevorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:

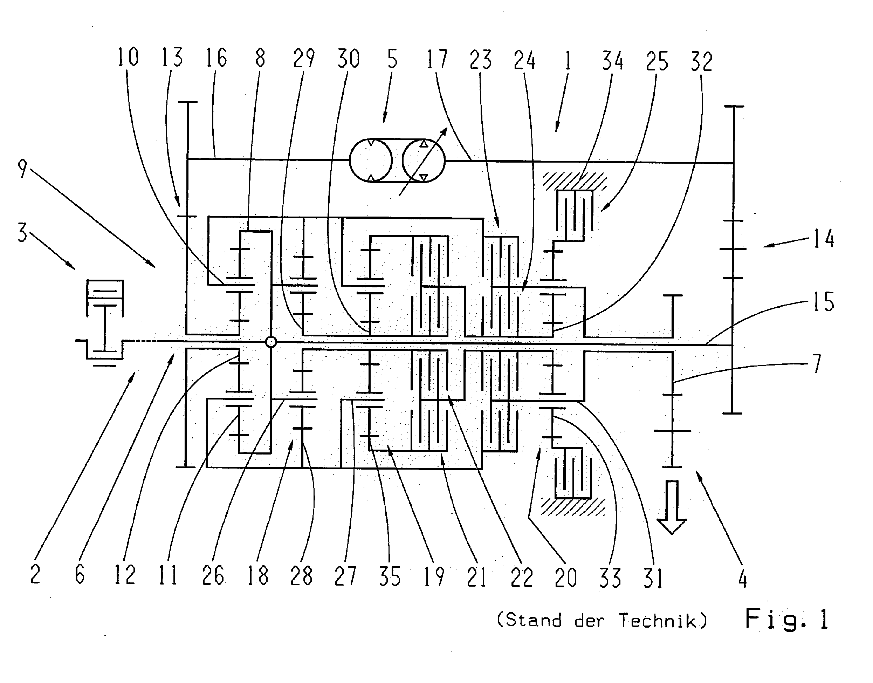

- Fig. 1: eine stark schematisierte Darstellung eines Antriebsstranges eines Fahrzeuges mit einem Räderschema einer aus der Praxis bekannten Getriebevorrichtung;
- Fig. 2: ein Blockschaltbild eines Teilbereiches einer erfindungsgemäßen stufenlosen Getriebevorrichtung;
- Fig. 3: eine Fig. 2 entsprechende Darstellung einer weiteren Ausführungsform der erfindungsgemäßen Getriebevorrichtung;
- Fig. 4: eine Fig. 2 entsprechende Darstellung einer dritten Ausführungsform der erfindungsgemäßen Getriebevorrichtung;
- Fig. 5: eine Fig. 2 entsprechende Darstellung einer vierten Ausführungsform der erfindungsgemäßen Getriebevorrichtung;
- Fig. 6: eine Fig. 1 entsprechende Darstellung der in Fig. 3 prinzipmäßig gezeigten Ausführungsform der erfindungsgemäßen Getriebevorrichtung;
- Fig. 7: eine Fig. 6 entsprechende Darstellung einer weiteren Ausführungsform der erfindungsgemäßen Getriebevorrichtung;
- Fig. 8: eine Fig. 6 entsprechende Darstellung einer weiteren Ausführungsform der erfindungsgemäßen Getriebevorrichtung;
- Fig. 9: eine Fig. 6 entsprechende Darstellung einer weiteren Ausführungsform der erfindungsgemäßen Getriebevorrichtung; und
- Fig. 10: ein Räderschema eines Ausführungsbeispieles der erfindungsgemäßen Getriebevorrichtung.

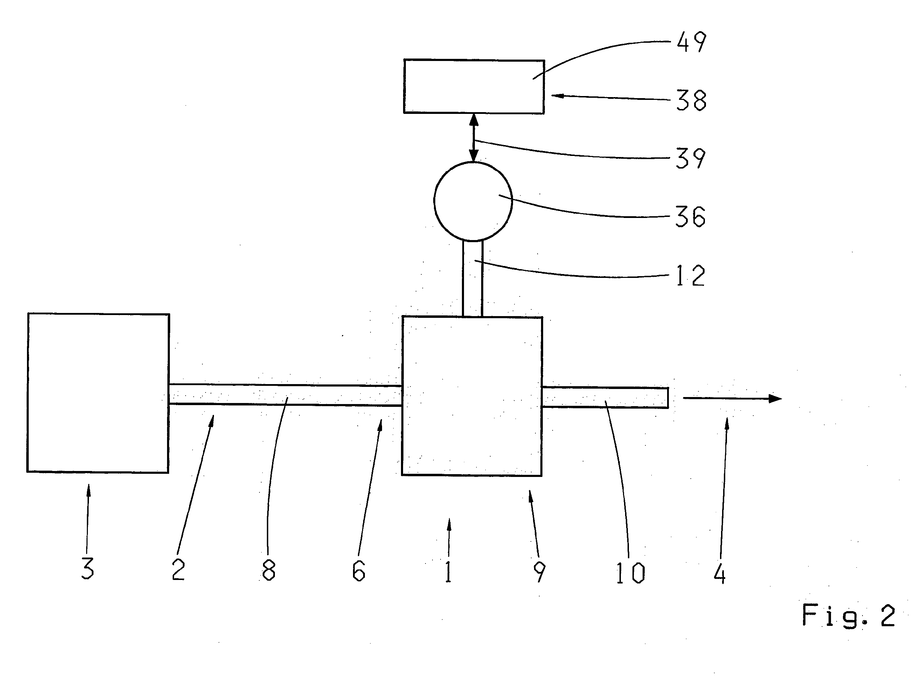

In Fig. 2 ist eine Prinzipdarstellung einer ersten Ausführungsform der erfindungsgemäßen Getriebevorrichtung 1 gezeigt, bei der die erste Welle 8 des Summierplanetengetriebes 9 mit der als elektrische Maschine ausführbaren Antriebsmaschine 3 in Wirkverbindung steht und eine elektrische Maschine 36 mit der Welle 12 des Summierplanetengetriebes 9 zum stufenlosen Variieren der Übersetzung der Getriebevorrichtung 1 mit einer elektrischen Maschine 36 verbunden ist. Die elektrische Maschine 36 ist sowohl motorisch als auch generatorisch betreibbar. Des Weiteren ist die elektrische Maschine 36 wiederum über eine elektrische Verbindung 39 mit einer elektrischen Energiequelle 38 gekoppelt, die vorliegend eine Brennstoffzelle 49 umfasst, in deren Bereich die für den motorischen Betrieb der elektrischen Maschine 36 erforderliche elektrische Energie erzeugbar ist. Die weitere Welle 10 des Summierplanetengetriebes 9 ist mit dem Abtrieb 4 in Wirkverbindung bringbar und die Antriebsmaschine 3 ist vorzugsweise auch von der Energiequelle 38 mit Energie versorgbar.

Grundsätzlich wird durch den motorischen oder generatorischen Betrieb der elektrischen Maschine 36 die Drehzahl der zweiten Welle 12 des Summierplanetengetriebes 9 variiert und somit die Übersetzung der stufenlosen Getriebevorrichtung 1 stufenlos verändert, womit das jeweils über die Antriebsmaschine 3 zur Verfügung gestellte Antriebsmoment in entsprechend gewandelter Höhe über die weitere Welle 10 bzw. die dritte Welle des Summierplanetengetriebes 9 in Richtung des Abtriebs weiterleitbar ist.

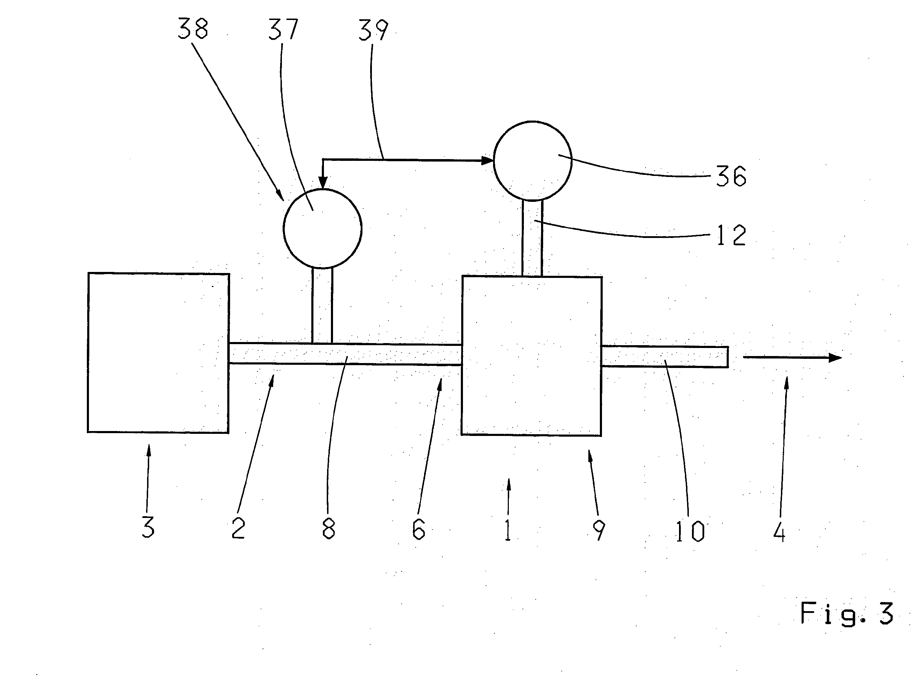

Fig. 3 zeigt eine weitere Teilprinzipdarstellung eines zweiten Ausführungsbeispieles der erfindungsgemäßen stufenlosen Getriebevorrichtung 1 mit Leistungsverzweigung, die im Bereich des Summierplanetengetriebes 9 erfolgt. Die erste Welle 8 des Summierplanetengetriebes steht mit der Antriebsmaschine 3 in Wirkverbindung. Die zweite Welle 12 des Summierplanetengetriebes 9 ist zum stufenlosen Variieren der Übersetzung der Getriebevorrichtung 1 mit der elektrischen Maschine 36 verbunden. Die elektrische Maschine 36 ist wiederum mit einer eine elektrische Maschine 37 umfassenden elektrischen Energiequelle 38 gekoppelt, wobei die elektrische Maschine 37 vorliegend im Bereich des Getriebeeingangs 6 mit der Antriebsmaschine 3 in Wirkverbindung steht.

Die Antriebsmaschine 3 ist als Brennkraftmaschine ausgebildet, deren Antriebsmoment über die Welle 8 des Summierplanetengetriebes 9 in die Getriebevorrichtung 1 eingeleitet wird. Im generatorischen Betrieb der elektrischen Maschine 37 der elektrischen Energiequelle 38 wird ein Teil des Antriebsmomentes der Antriebsmaschine 3 zum Erzeugen von elektrischer Energie verwendet, die über eine elektrische Verbindung 39 der elektrischen Maschine 36 während eines motorischen Betriebes der elektrischen Maschine 36 zuführbar ist. Im generatorischen Betrieb der elektrischen Maschine 36 ist die dort erzeugte elektrische Energie über die elektrische Verbindung 39 der elektrischen Maschine 37 der elektrischen Energiequelle 38 zuführbar und bei motorischem Betrieb der elektrischen Maschine 37 als Drehmoment in den Leistungsfluss zwischen der Antriebsmaschine 3 und dem Summierplanetengetriebe 8 vorzugsweise für den Antrieb eines Fahrzeuges einleitbar.

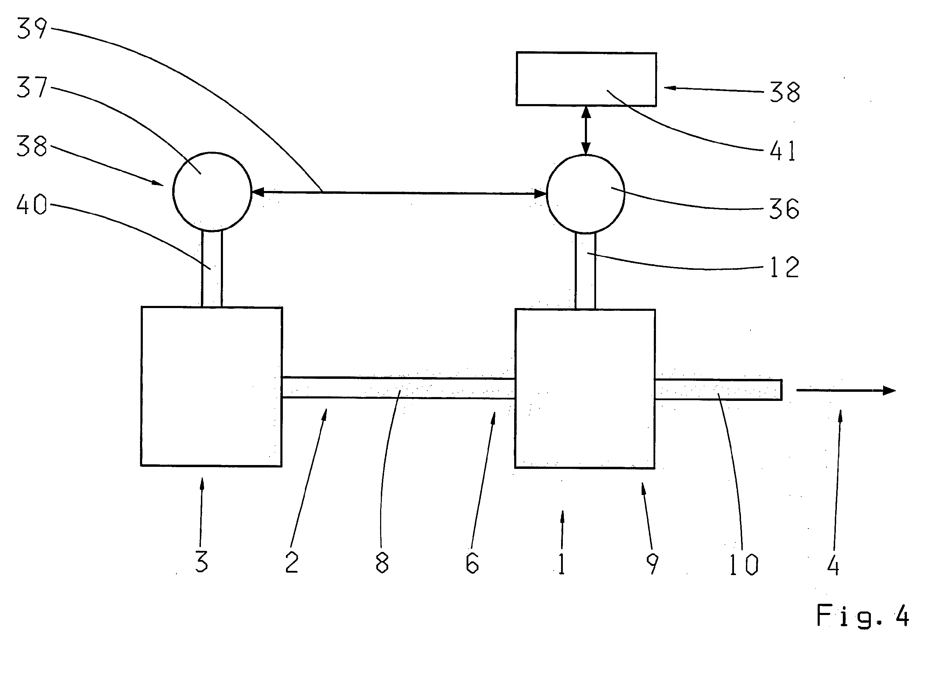

Bei dem in Fig. 4 dargestellten weiteren Ausführungsbeispiel der erfindungsgemäßen Getriebevorrichtung 1 ist die elektrische Maschine 37 über eine von der ersten Welle 8 des Summierplanetengetriebes 9 getrennt ausgeführte Welle 40 mit der ebenfalls als Brennkraftmaschine ausgeführten Antriebsmaschine 3 wirkverbunden und im vorbeschriebenen Umfang mit der elektrischen Maschine 36 elektrisch gekoppelt. Neben der elektrischen Maschine 37 umfasst die elektrische Energiequelle 38 eine elektrische Speichereinrichtung 41, in deren Bereich von den elektrischen Maschinen 36 und 37 erzeugte elektrische Energie zwischenspeicherbar ist und über die sowohl die elektrische Maschine 36 als auch die elektrische Maschine 37 mit elektrischer Energie versorgbar sind.

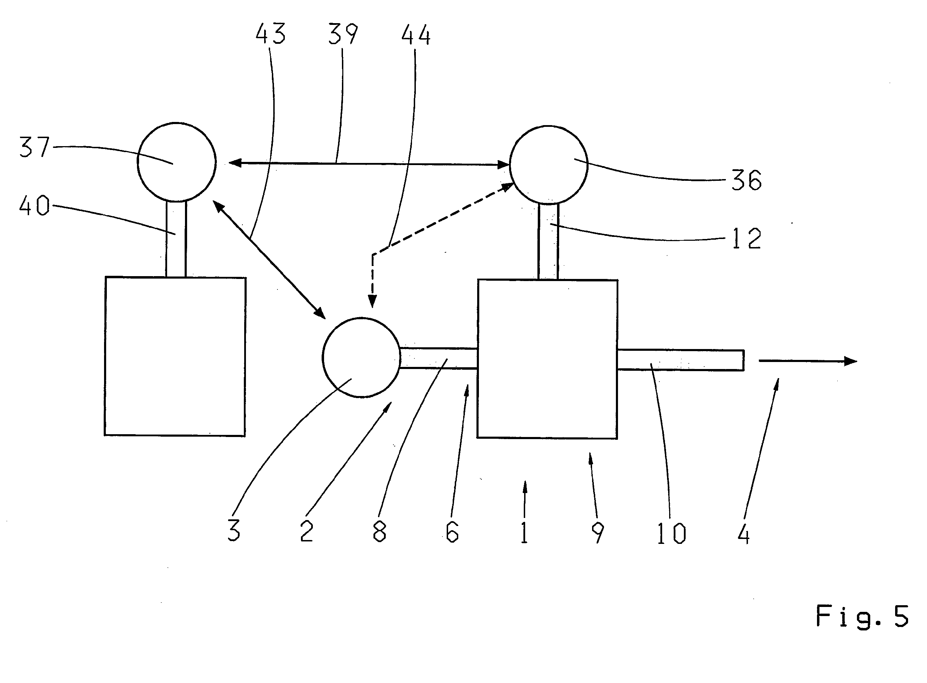

Fig. 5 zeigt eine Weiterbildung des in Fig. 4 dargestellten Antriebssystems, bei welcher die Antriebsmaschine 3 als elektrische Maschine 37 ausgebildet ist. Die elektrische Maschine 37 der elektrischen Energiequelle 38 ist vorliegend mit einer Brennkraftmaschine 42 verbunden, womit bei brennkraftmaschinenseitigem Antrieb der elektrischen Maschine 37 und gleichzeitig motorischem Betrieb der elektrischen Maschine 37 in deren Bereich elektrische Energie erzeugt wird. Die im Bereich der elektrischen Maschine 37 erzeugte elektrische Energie ist über die elektrische Verbindung 39 der elektrischen Maschine 36 zuführbar.

Gleichzeitig ist die elektrische Maschine 37 der elektrischen Energiequelle 38 über eine weitere elektrische Verbindung 43 mit der als elektrische Maschine ausgeführten Antriebsmaschine 3 verbunden. Zusätzlich sind auch die Antriebsmaschine 3 und die elektrische Maschine 36 über eine zusätzliche elektrische Verbindung 44 miteinander gekoppelt. Bei dem in Fig. 5 gezeigten Antriebssystem ist über die Brennkraftmaschine 42 Strom erzeugbar, der im Bereich der Antriebsmaschine 3 in ein Antriebsmoment umwandelbar ist. Gleichzeitig ist der im Bereich der elektrischen Maschine 37 erzeugte elektrische Strom zur Darstellung des motorischen Betriebes der elektrischen Maschine 36 verwendbar.

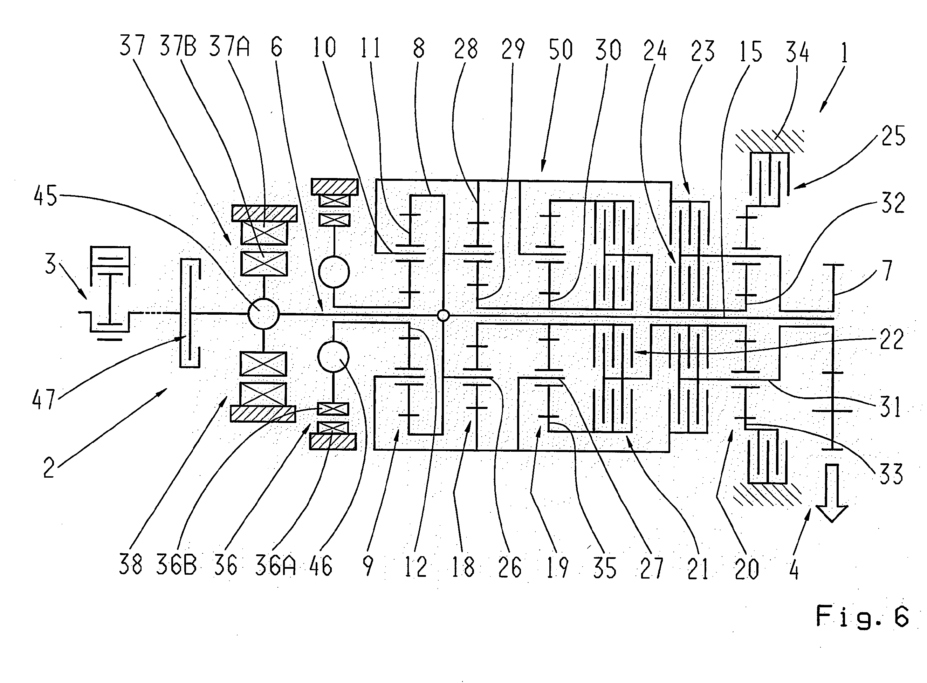

Eine detaillierte Darstellung der in Fig. 4 prinzipiell dargestellten Ausführungsform der erfindungsgemäßen Getriebevorrichtung 1 zeigt Fig. 6, bei welcher die elektrische Maschine 37 der elektrischen Energiequelle 38 über ein Getriebe 45 mit der als Hohlrad ausgeführten ersten Welle 8 des Summierplanetengetriebes 9 verbunden ist, womit eine Rotordrehzahl an den optimalen Betriebsbereich der elektrischen Maschine 37 anpassbar ist. Die elektrische Maschine 36 ist über ein weiteres Getriebe 46 mit der als Sonnenrad ausgeführten zweiten Welle 12 des Summierplanetengetriebes 9 gekoppelt und ebenfalls optimiert betreibbar.

Die elektrischen Maschinen 36 und 37 der Getriebevorrichtung 1 gemäß Fig. 6 sind axial nebeneinander angeordnet, womit die Getriebevorrichtung 1 in radialer Richtung durch einen geringen Bauraumbedarf gekennzeichnet ist. Zusätzlich ist zwischen der elektrischen Maschine 37 und der als Brennkraftmaschine ausgeführten Antriebsmaschine 3 eine Trennkupplung 47 vorgesehen, um die Antriebsmaschine 3 betriebszustandsabhängig mit der Getriebevorrichtung 1 zu verbinden oder von dieser abzukoppeln.

Damit besteht beispielsweise die Möglichkeit während eines rein elektrischen Fahrbetriebes über die elektrische Maschine 37 und/oder die elektrische Maschine 36 im Bereich der dann vorzugsweise abgeschalteten Antriebsmaschine 3 auftretende Schleppmomente nicht in den weiteren Antriebsstrang eines Fahrzeuges einzuleiten und ein Fahrzeug im rein elektrischen Fahrbetrieb mit hohem Wirkungsgrad betreiben zu können.

Bei geöffneten reibschlüssigen Schaltelementen 21 bis 25 ist der Kraftfluss zwischen dem Getriebeeingang 6 und dem Abtrieb 4 im Bereich der Getriebevorrichtung 1 unterbrochen, womit bei geschlossener Trennkupplung 47 und entsprechendem motorischem Betrieb der elektrischen Maschine 37 diese als Anlasser für einen Startvorgang der Antriebsmaschine 3 verwendbar ist.

Wird die elektrische Maschine 36 entsprechend abgeschaltet, werden Schleppmomente während eines Startvorganges der Antriebsmaschine 3 auf einfache Art und Weise reduziert, da im Bereich der abgeschalteten elektrischen Maschine 36 eine elektromagnetische Drehmomentübertragung auf einfache Art und Weise vermieden wird.

Über die Getriebewelle 15 besteht beispielsweise die Möglichkeit, weitere mit einer vorzugsweise als landwirtschaftliches Fahrzeug ausgeführten Arbeitsmaschine zu betreibende Arbeitsgeräte ausgehend von der Antriebsmaschine 3 oder der elektrischen Maschine 37 mit Drehmoment zu versorgen, wobei auch während eines reinen arbeitsmaschinenseitigen Antriebsmodus die elektrische Maschine 36 zur Reduzierung von Schleppmomenten entsprechend abschaltbar ist.

Alternativ hierzu besteht jedoch auch die Möglichkeit, einen Startvorgang der Antriebsmaschine 3 durch Schließen der reibschlüssigen Schaltelemente 21 und 22 und einem damit einhergehenden Verblocken des Summierplanetengetriebes 9 in motorischem Betrieb der elektrischen Maschine 36 zu unterstützen.

Zusätzlich ist ein mit der Getriebevorrichtung 1 ausgeführtes Fahrzeug bei geöffneter Trennkupplung 47 und entsprechender Drehrichtung der elektrischen Maschine 37 und entsprechend betätigten reibschlüssigen Schaltelementen 21 bis 25 ohne eine der Getriebevorrichtung 1 nachgeschaltete Wendegetriebeeinheit in Rückwärtsfahrtrichtung zu betreiben, womit die Getriebevorrichtung 1 baumraum- und kostengünstig sowie mit geringem Eigengewicht ausführbar ist.

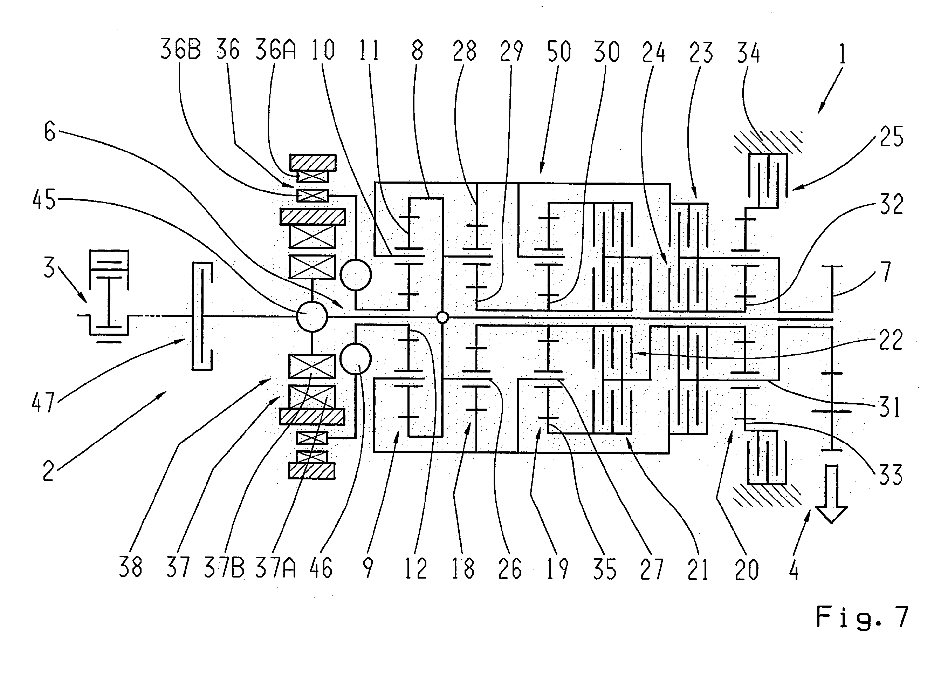

Die in Fig. 7 dargestellte weitere Ausführungsform der erfindungsgemäßen stufenlosen Getriebevorrichtung 1 entspricht bis auf die Anordnung der elektrischen Maschinen 36 und 37 im Wesentlichen der in Fig. 6 gezeigten Ausführungsform, weshalb nachfolgend im Wesentlichen lediglich auf die Unterschiede eingegangen wird und bezüglich der weiteren Funktionsweise der Getriebevorrichtung 1 gemäß Fig. 7 auf die vorstehende Beschreibung verwiesen wird.

Bei der Ausführung der Getriebevorrichtung 1 gemäß Fig. 7 ist die elektrische Maschine 37 radial innerhalb der elektrischen Maschine 36 angeordnet, weshalb die Getriebevorrichtung 1 in radialer Richtung einen größeren Bauraumbedarf als die Getriebevorrichtung 1 gemäß Fig. 6 aufweist. In axialer Richtung ist die Getriebevorrichtung 1 gemäß Fig. 7 jedoch durch einen geringeren Bauraumbedarf als die Getriebevorrichtung 1 gemäß Fig. 6 gekennzeichnet.

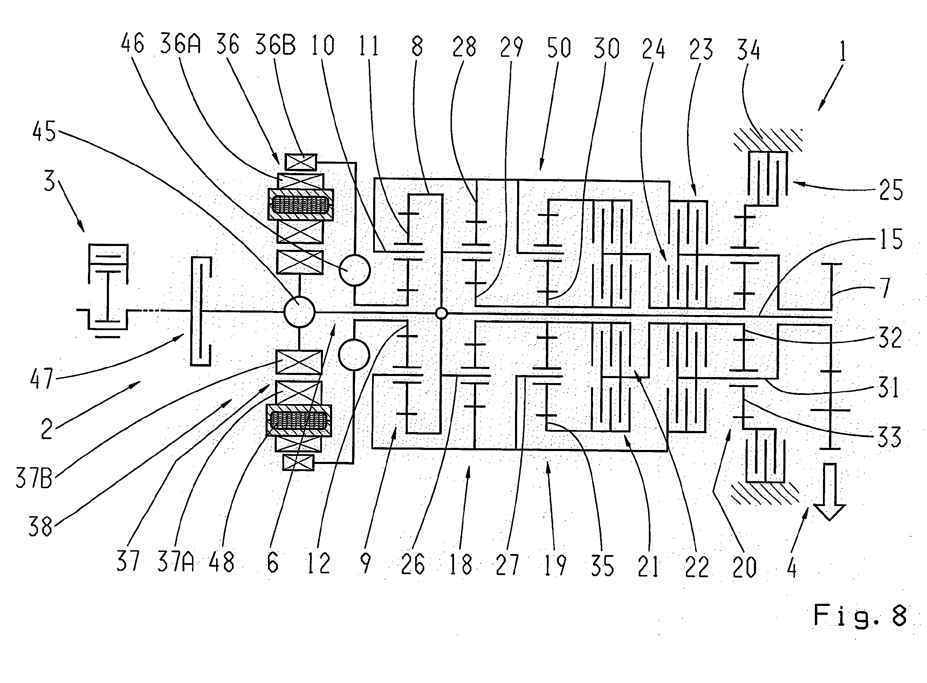

Fig. 8 zeigt eine Weiterbildung der Getriebevorrichtung 1 gemäß Fig. 7, bei welcher die elektrische Maschine 36 und die elektrische Maschine 37 einen gemeinsamen Kühlkreislauf 48 aufweisen. Bei der Getriebevorrichtung 1 gemäß Fig. 8 wird die integrierte Anordnung der elektrischen Maschinen 36 und 37 neben der axialen Bauraumreduzierung zu einer kostengünstigen Darstellung gemeinsamer Funktionen und Einrichtungen der elektrischen Maschinen 36 und 37 genutzt, wobei der gemeinsame Kühlkreislauf 48 durch eine angepasste Anordnung der Statoren 36A, 37A und Rotoren 36B, 37B der elektrischen Maschinen 36 und 37 ermöglicht wird.

Die in Fig. 7 und Fig. 8 dargestellte Anordnung der elektrischen Maschinen 36 und 37 zueinander kann in Abhängigkeit des jeweils vorliegenden Anwendungsfalles auch dahingehend abweichen, dass die elektrische Maschine 36 innerhalb der elektrischen Maschine 37 positioniert ist.

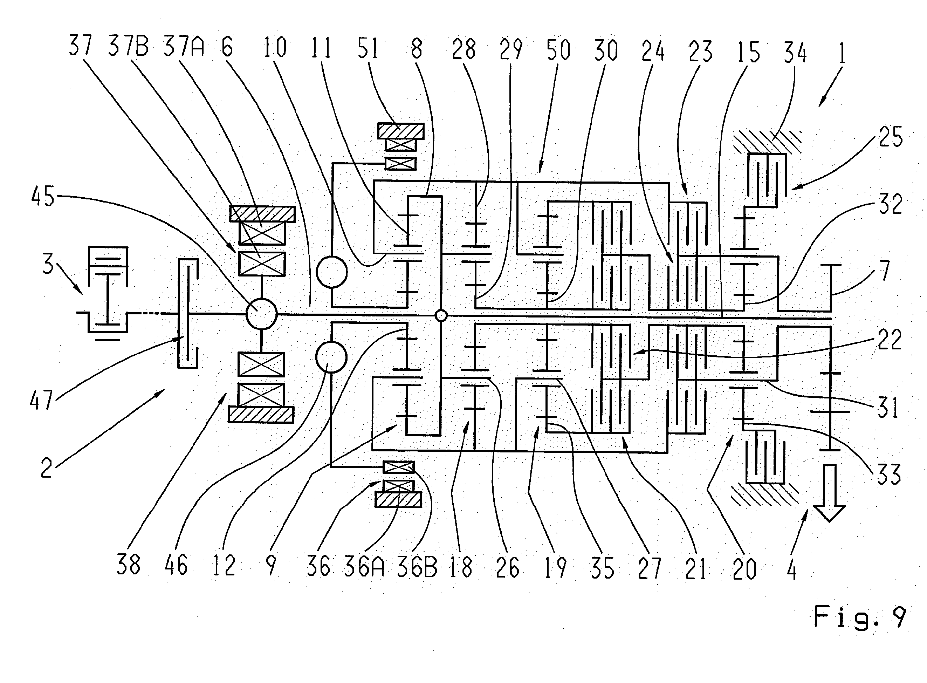

Die in Fig. 9 dargestellte weitere Ausführungsform der erfindungsgemäßen Getriebevorrichtung 1 ist durch eine weitere Anordnung der elektrischen Maschinen 36 und 37 zueinander und in Bezug auf das Summierplanetengetriebe 9 gekennzeichnet, wobei die elektrische Maschine 37 axial vor dem Summierplanetengetriebe 9 angeordnet ist und die elektrische Maschine 36 das Summierplanetengetriebe 9 radial umgreift. Die Anordnung der elektrischen Maschine 36 stellt eine vergleichsweise bauraumgünstige Realisierung eines maximalen Durchmessers des Rotors 36B der elektrischen Maschine 36 im Raum zwischen der Planetenwalze bzw. dem Summierplanetengetriebe 9 und einem Getriebegehäuse 51 der Getriebevorrichtung 1 dar. Der Stator 36A der elektrischen Maschine 36 ist auf einfache Art und Weise im Getriebegehäuse 51 anordenbar, womit Lagerungs- und Kühlfunktionen, wie eine Wärmeableitung sowie eine Integration von Kühlkanälen und dergleichen in das Getriebegehäuse 51 verlagerbar sind.

Durch die im Bereich der Trennkupplung 47 bestehende Möglichkeit der Abkopplung der als Brennkraftmaschine ausgeführten Antriebsmaschine 3 der in Fig. 5 bis Fig. 8 dargestellten Ausführungsbeispiele der Getriebevorrichtung 1 ist die Abtriebsdrehrichtung im Bereich des Abtriebs 4 ohne zusätzliche mechanische Komponenten der Getriebevorrichtung 1, wie eines Wendeplaneten oder eines Vorgelegegetriebes zur Darstellung eines Vorwärtsfahrbetriebes oder eines Rückwärtsfahrbetriebes umkehrbar. Der Rückwärtsfahrbetrieb wird durch entsprechende Ansteuerung der elektrischen Maschine 37 und/oder der elektrischen Maschine 36 ermöglicht, wobei die hierfür notwendige elektrische Antriebsleistung von der elektrischen Maschine 37 während eines generatorischen Betriebes oder eines weiteren Generators, wie bei der Getriebevorrichtung 1 gemäß Fig. 5, im Antriebssystem in Verbindung mit einer weiteren Brennkraftmaschine oder aus einem elektrischen Speichersystem, wie einer Batterie, zur Verfügung stellbar ist. Ebenso ist bei entsprechend gespeicherter elektrischer Energie ein emissionsfreier elektromaschinenseitiger Fahrbetrieb ohne Mitschleppen der als Brennkraftmaschine ausgeführten Antriebsmaschine 3 bei geöffneter Trennkupplung 47 für einen begrenzten Zeitraum möglich.

Ist die elektrische Maschine 37 nicht mit dem Getriebeeingang 6 verbunden und ist der Getriebeeingang 6 bzw. die Welle 8 des Summierplanetengetriebes 9 frei drehbar, ist der Rückwärtsfahrbetrieb durch Verblocken des Summierplanetengetriebes 9, d. h. bei geschlossenen reibschlüssigen Schaltelementen 23 und 24, in Verbindung mit gleichzeitig geschlossenem reibschlüssigen Schaltelement 21 oder geschlossenem reibschlüssigen Schaltelement 22 in motorischem Betrieb der elektrischen Maschine 36 mit reduziertem Abtriebsmoment realisierbar.

Alternativ hierzu ist der Rückwärtsfahrbetrieb über die elektrische Maschine 36 bei frei drehbarem Getriebeeingang 6 auch dann darstellbar, wenn die reibschlüssigen Schaltelemente 21 und 22 sowie die Bremse 25 gleichzeitig geschlossen sind.

Ist die elektrische Maschine 37 in der in Fig. 6 bis Fig. 9 dargestellten Art und Weise mit dem Getriebeeingang 6 verbunden, steht die volle Funktionalität der stufenlosen Getriebevorrichtung 1 auch im Rückwärtsfahrbetrieb zur Verfügung. Das bedeutet, dass alle über die Getriebevorrichtung 1 zur Verfügung stellbaren Übersetzungsbereiche mit hoher Zugkraft nutzbar sind und ein mit der Getriebevorrichtung 1 gemäß Fig. 6 bis Fig. 9 ausgeführtes Fahrzeug auch mit hohen Fahrgeschwindigkeiten rückwärts betrieben werden kann.

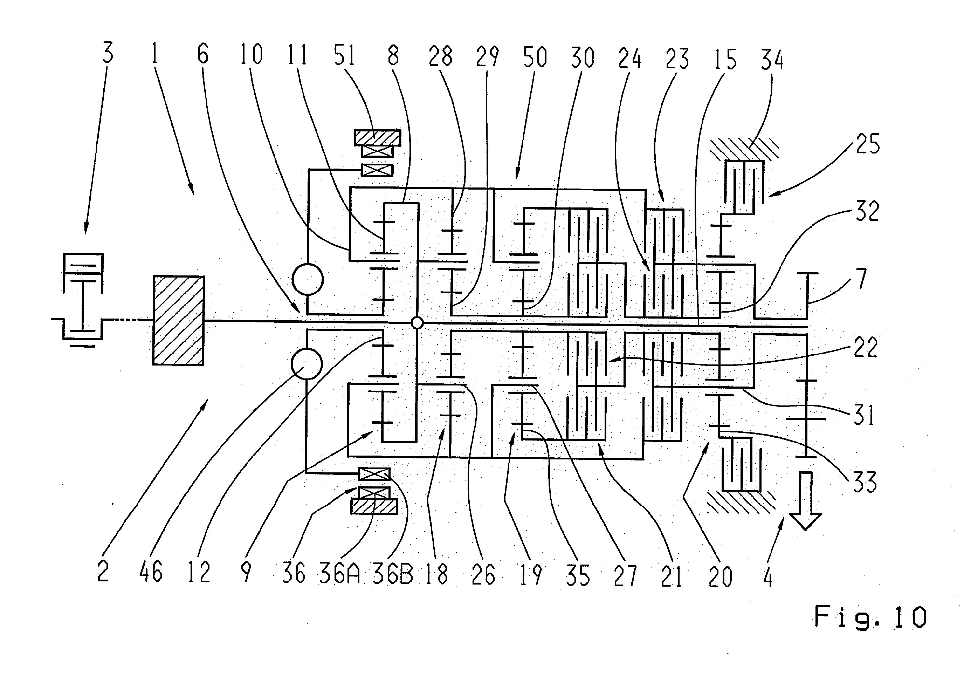

Fig. 10 zeigt eine detaillierte Darstellung des in Fig. 4 dargestellten Antriebsstrangsystems, bei welcher die elektrische Maschine 37 nicht im Bereich des Getriebeeingangs 6 angeordnet und nicht mit diesem direkt verbunden ist. Bei dieser Ausführungsform der Getriebevorrichtung 1 ist die volle Getriebefunktionalität auch während eines Rückwärtsfahrbetriebes nutzbar, wenn der Getriebeeingang 6 beispielsweise während eines entsprechenden Betriebes der Antriebsmaschine 3, d. h. bei abgeschalteter Brennkraftmaschine, drehfest gehalten ist und am Abtrieb ein entsprechendes Abtriebsmoment von der elektrischen Maschine 36 zur Verfügung gestellt wird.

Die in Fig. 6 bis Fig. 10 dargestellte Getriebestruktur der erfindungsgemäßen Getriebevorrichtung 1 ist jeweils mit der elektrischen Maschine 37 gekoppelt, die mit der als Brennkraftmaschine ausgeführten Antriebsmaschine 3 und der ersten Welle 8 des Summierplanetengetriebes 9 verbunden ist. Die Getriebevorrichtung 1 ist neben dem Summierplanetengetriebe 9 jeweils mit den drei weiteren Planetenradsätzen 18, 19 und 20 ausgeführt, um in Verbindung mit den reibschlüssigen Schaltelementen 21 bis 25 mehrere Übersetzungsbereiche zur Verfügung stellen zu können.

In Abhängigkeit des jeweils vorliegenden Anwendungsfalles besteht auch die Möglichkeit, die Getriebevorrichtung 1 mit einer geringeren Anzahl an Planetenradsätzen und reibschlüssigen Schaltelementen auszuführen, wobei dann eine reduzierte Anzahl an Übersetzungsbereichen zur Verfügung steht. Wiederum alternativ hierzu besteht auch die Möglichkeit, die Planetenradsätze 18, 19 und 20 des Schaltgetriebes 50 durch andere geeignete Getriebeelemente zu ersetzen, mittels welchen in Kombination mit Schaltelementen verschiedene Übersetzungsbereiche darstellbar sind.

Die elektrischen Maschinen 36 und 37 der erfindungsgemäßen Getriebevorrichtung 1 sind jeweils derart in ein elektronisches Steuerungssystem der Getriebevorrichtung 1 eingebunden, dass in Betriebszuständen der Getriebevorrichtung 1, während welchen das Sonnenrad 12 bzw. die zweite Welle des Summierplanetengetriebes 9 zur stufenlosen Veränderung der Übersetzung der Getriebevorrichtung 1 innerhalb eines Übersetzungsbereiches anzutreiben ist, die elektrische Maschine 37 generatorisch betrieben wird und elektrische Leistung an die motorisch betriebene elektrische Maschine 36 abgibt. Die für den Betrieb der elektrischen Maschine 36 erforderliche elektrische Antriebsleistung kann alternativ oder zusätzlich aus einem elektrischen Speichersystem, wie der elektrischen Speichereinrichtung 41, zur Verfügung gestellt werden.

In Betriebszuständen der Getriebevorrichtung 1, während welchen das Sonnenrad 12 des Summierplanetengetriebes 9 auf eine bestimmte Drehzahl abzubremsen ist, wird die elektrische Maschine 36 generatorisch betrieben und die im Bereich der elektrischen Maschine 36 erzeugte elektrische Leistung beispielsweise an die elektrische Speichereinrichtung 41, ein elektrisches Verbrauchersystem des Fahrzeuges oder die motorisch betriebene elektrische Maschine 37 abgeführt.

### Bezugszeichen

- 1: Getriebevorrichtung
- 2: Fahrzeugantriebsstrang
- 3: Antriebsmaschine
- 4: Abtrieb
- 5: Variator
- 6: Getriebeeingang
- 7: Getriebeausgangswelle
- 8: erste Welle des Summierplanetengetriebes
- 9: Summierplanetengetriebe
- 10: dritte Welle des Summierplanetengetriebes
- 11: Planetenrad
- 12: zweite Welle des Summierplanetengetriebes
- 13: Stirnradverzahnung
- 14: Räderkette
- 15: Getriebewelle
- 16: erste Welle des Variators
- 17: zweite Welle des Variators
- 18 bis 20: Planetenradsatz
- 21 bis 25: reibschlüssiges Schaltelement
- 26: Planetenträger
- 27: Planetenträger
- 28: Hohlrad
- 29: Sonnenrad
- 30: Sonnenrad
- 31: Planetenträger
- 32: Sonnenrad
- 33: Hohlrad
- 34: getriebegehäusefestes Bauteil
- 35: Hohlrad
- 36: elektrische Maschine
- 36A: Stator
- 36B: Rotor
- 37: elektrische Maschine
- 37A: Stator
- 37B: Rotor
- 38: elektrische Energiequelle
- 39: elektrische Verbindung
- 40: Welle
- 41: elektrische Speichereinrichtung
- 42: Brennkraftmaschine
- 43: weitere elektrische Verbindung
- 44: zusätzliche elektrische Verbindung
- 45: Getriebe
- 46: weiteres Getriebe
- 47: Trennkupplung
- 48: gemeinsamer Kühlkreislauf
- 49: Brennstoffzelle
- 50: Schaltgetriebe
- 51: Getriebegehäuse

## Patentansprüche

1. Stufenlose Getriebevorrichtung (1) mit Leistungsverzweigung, die im Bereich eines Summierplanetengetriebes (9) erfolgt, wobei eine erste Welle (8) des Summierplanetengetriebes (9) mit einer Antriebsmaschine (3) in Wirkverbindung bringbar ist, wobei eine zweite Welle (12) des Summierplanetengetriebes (9) zum stufenlosen Variieren der Übersetzung mit einer elektrischen Maschine (36) verbindbar ist, die wiederum mit einer elektrischen Energiequelle (38) koppelbar ist **dadurch gekennzeichnet, dass**, die Antriebsmaschine (3) als eine elektrische Maschine (36, 37) ausgebildet ist und die als elektrische Maschine ausgeführte Antriebsmaschine (3) mit der Energiequelle (38) und mit der mit der zweiten Welle (12) des Summierplanetengetriebes (9) verbindbaren elektrischen Maschine (36) elektrisch gekoppelt ist, wobei eine dritte Welle (10) des Summierplanetengetriebes (9) mit einem Abtrieb (4) koppelbar ist und die dritte Welle (10) des Summierplanetengetriebes (9) mit einem Schaltgetriebe (50) verbunden ist, das mehrere Planetengetriebeeinrichtungen (18, 19, 20) umfasst, deren Wellen zur Darstellung verschiedener Übersetzungsbereiche, innerhalb welcher die Übersetzung jeweils über das Summierplanetengetriebe (9) und die damit verbundene elektrische Maschine (36) stufenlos variierbar ist, über Schaltelemente (21 bis 24) miteinander verbindbar sind.

2. Stufenlose Getriebeeinrichtung nach Anspruch 1, **dadurch gekennzeichnet, dass** die elektrische Energiequelle (38) eine Brennstoffzelle (49) aufweist.

3. Stufenlose Getriebevorrichtung nach Anspruch 1 oder 2, **dadurch gekennzeichnet, dass** die elektrische Energiequelle (38) eine elektrische Maschine (37) umfasst, die mit einer Antriebsmaschine (3), in Wirkverbindung bringbar ist.

4. Stufenlose Getriebevorrichtung nach einem der Ansprüche 1 bis 3, **dadurch gekennzeichnet, dass** die elektrische Energiequelle (38) eine elektrische Speichereinrichtung (41) aufweist.

5. Stufenlose Getriebevorrichtung nach einem der Ansprüche 1 bis 4, **dadurch gekennzeichnet, dass** die Antriebsmaschine (3) über ein reibschlüssiges Schaltelement (47) mit der ersten Welle (8) des Summierplanetengetriebes (9) verbindbar ist.

6. Stufenlose Getriebevorrichtung nach einem der Ansprüche 1 bis 5, **dadurch gekennzeichnet, dass** die erste Welle (8) des Summierplanetengetriebes (9) ein Hohlrad ist.

7. Stufenlose Getriebevorrichtung nach einem der Ansprüche 1 bis 6, **dadurch gekennzeichnet, dass** die zweite Welle (12) des Summierplanetengetriebes (9) als ein Sonnenrad ausgeführt ist.

8. Stufenlose Getriebevorrichtung nach einem der Ansprüche 1 bis 7, **dadurch gekennzeichnet, dass** die dritte Welle (10) des Summierplanetengetriebes (9) als Planetenträger ausgeführt ist.

9. Stufenlose Getriebevorrichtung nach Anspruch 8, **dadurch gekennzeichnet, dass** die Schaltelemente (21 bis 24) als reibschlüssige Schaltelemente (21 bis 24) ausgeführt sind.

10. Stufenlose Getriebevorrichtung nach Anspruch 9, **dadurch gekennzeichnet, dass** die dritte Welle (10) des Summierplanetengetriebes (9) mit einer ersten Welle (28) einer ersten Planetengetriebeeinrichtung (18) des Schaltgetriebes (50) und mit einer ersten Welle (27) einer zweiten Planetengetriebeeinrichtung (19) des Schaltgetriebes (50) verbunden ist.
(Weiter auf Seite 24 der ursprünglich eingereichten Unterlagen.)

## Claims

1. Variable transmission device (1) with split torque, which takes place in the region of a summing planetary gear (9), a first shaft (8) of the summing planetary gear (9) being operatively connectable to an engine (3), a second shaft (12) of the summing planetary gear (9) being connectable, for the continuous variation of the transmission ratio, to an electric machine (36) which, in turn, is couplable to an electrical energy source (38), **characterized in that** the engine (3) is designed as an electric machine (36, 37) and the engine (3) designed as an electric machine is electrically coupled to the energy source (38) and to the electric machine (36) connectable to the second shaft (12) of the summing planetary gear (9), a third shaft (10) of the summing planetary gear (9) being couplable to an output (4), and the third shaft (10) of the summing planetary gear (9) being connected to a shift gear (50) which comprises a plurality of planetary gear devices (18, 19, 20), the shafts of which are connectable to one another via shift elements (21 to 24) in order to represent various transmission ratio ranges within which the transmission ratio can in each case be varied continuously via the summing planetary gear (9) and the electric machine (36) connected thereto.

2. Variable transmission device according to Claim 1, **characterized in that** the electrical energy source (38) has a fuel cell (49).

3. Variable transmission device according to Claim 1 or 2, **characterized in that** the electrical energy source (38) comprises an electric machine (37) which is operatively connectable to an engine (3).

4. Variable transmission device according to one of Claims 1 to 3, **characterized in that** the electrical energy source (38) has an electrical accumulator device (41).

5. Variable transmission device according to one of Claims 1 to 4, **characterized in that** the engine (3) is connectable to the first shaft (8) of the summing planetary gear (9) via a frictional shift element (47).

6. Variable transmission device according to one of Claims 1 to 5, **characterized in that** the first shaft (8) of the summing planetary gear (9) is a ring wheel.

7. Variable transmission device according to one of Claims 1 to 6, **characterized in that** the second shaft (12) of the summing planetary gear (9) is designed as a sun wheel.

8. Variable transmission device according to one of Claims 1 to 7, **characterized in that** the third shaft (10) of the summing planetary gear (9) is designed as a planet carrier.

9. Variable transmission device according to Claim 8, **characterized in that** the shift elements (21 to 24) are designed as frictional shift elements (21 to 24).

10. Variable transmission device according to Claim 9, **characterized in that** the third shaft (10) of the summing planetary gear (9) is connected to a first shaft (28) of a first planetary gear device (18) of the shift gear (50) and to a first shaft (27) of a second planetary gear device (19) of the shift gear (50).

## Revendications

1. Dispositif de transmission à variation continue (1) avec division de puissance, qui a lieu dans la région d'un engrenage planétaire sommateur (9), un premier arbre (8) de l'engrenage planétaire sommateur (9) pouvant être amené en liaison fonctionnelle avec une machine motrice (3), un deuxième arbre (12) de l'engrenage planétaire sommateur (9) pouvant être connecté à une machine électrique (36) en vue de faire varier la démultiplication de manière continue, laquelle machine électrique peut à son tour être accouplée à une source d'énergie électrique (38), **caractérisé en ce que** la machine motrice (3) est réalisée sous forme de machine électrique (36, 37) et la machine motrice (3) réalisée sous forme de machine électrique est accouplée électriquement à la source d'énergie (38) et à la machine électrique (36) pouvant être connectée au deuxième arbre (12) de l'engrenage planétaire sommateur (9), un troisième arbre (10) de l'engrenage planétaire sommateur (9) pouvant être accouplé à une prise de force (4) et le troisième arbre (10) de l'engrenage planétaire sommateur (9) étant connecté à une transmission à changement de vitesses (50) qui comprend plusieurs systèmes d'engrenages planétaires (18, 19, 20), dont les arbres peuvent être connectés les uns aux autres par le biais d'éléments de commutation (21 à 24) pour produire différentes plages de démultiplication, à l'intérieur desquelles la démultiplication peut être variée en continu à chaque fois par le biais de l'engrenage planétaire sommateur (9) et de la machine électrique (36) connectée à celui-ci.

2. Dispositif de transmission à variation continue selon la revendication 1, **caractérisé en ce que** la source d'énergie électrique (38) présente une pile à combustible (49).

3. Dispositif de transmission à variation continue selon la revendication 1 ou 2, **caractérisé en ce que** la source d'énergie électrique (38) comprend une machine électrique (37) qui peut être amenée en liaison fonctionnelle avec une machine motrice (3).

4. Dispositif de transmission à variation continue selon l'une quelconque des revendications 1 à 3, **caractérisé en ce que** la source d'énergie électrique (38) présente un dispositif accumulateur électrique (41).

5. Dispositif de transmission à variation continue selon l'une quelconque des revendications 1 à 4, **caractérisé en ce que** la machine motrice (3) peut être connectée par le biais d'un élément de commutation à engagement par friction (47) au premier arbre (8) de l'engrenage planétaire sommateur (9).

6. Dispositif de transmission à variation continue selon l'une quelconque des revendications 1 à 5, **caractérisé en ce que** le premier arbre (8) de l'engrenage planétaire sommateur (9) est une couronne dentée.

7. Dispositif de transmission à variation continue selon l'une quelconque des revendications 1 à 6, **caractérisé en ce que** le deuxième arbre (12) de l'engrenage planétaire sommateur (9) est réalisé sous forme de roue solaire.

8. Dispositif de transmission à variation continue selon l'une quelconque des revendications 1 à 7, **caractérisé en ce que** le troisième arbre (10) de l'engrenage planétaire sommateur (9) est réalisé sous forme de porte-satellites.

9. Dispositif de transmission à variation continue selon la revendication 8, **caractérisé en ce que** les éléments de commutation (21 à 24) sont réalisés sous forme d'éléments de commutation à engagement par friction (21 à 24).

10. Dispositif de transmission à variation continue selon la revendication 9, **caractérisé en ce que** le troisième arbre (10) de l'engrenage planétaire sommateur (9) est connecté à un premier arbre (28) d'un premier système d'engrenage planétaire (18) de la transmission à changement de vitesses (50) et à un premier arbre (27) d'un deuxième système d'engrenage planétaire (19) de la transmission à changement de vitesses (50).
